# EUROPEAN PATENT SPECIFICATION

(11) **EP 0 541 184 B1**
(45) Date of publication and mention of the grant of the patent: **18.03.1998**
(21) Application number: 92203421.0
(22) Date of filing: 06.11.1992
(51) Int. Cl.: C05F 17/00, C05F 17/02, B01D 53/00, B01D 51/10

(54) **Process and device for composting organic material**
Verfahren zum Kompostieren von organischen Stoffen und Vorrichtung zur Durchführung dieses Verfahrens
Procédé de compostage de matériaux organiques et appareil pour ce procédé

(30) Priority: 08.11.1991 NL 9101873; 08.11.1991 NL 9101874
(43) Date of publication of application: 12.05.1993
(73) Proprietor: VELUWSE AFVAL RECYCLING B.V., NL-7418 AV Deventer (NL)
(72) Inventor: Boone,Jan, nl-7383 XP Voorst (NL)
(74) Representative: Schumann, Bernard Herman Johan

(56) References cited:
- EP-A- 0 040 147
- EP-A- 0 111 302
- EP-A- 0 173 502
- EP-A- 0 244 391
- EP-A- 0 296 645
- EP-A- 0 309 872
- EP-A- 0 329 643
- EP-A- 0 356 816
- EP-A- 0 391 753
- WO-A-86/01198
- WO-A-91/03441
- AT-B- 344 745
- AT-B- 359 532
- DE-A- 3 709 269
- DE-A- 3 803 613
- DE-A- 4 000 510
- FR-A- 907 573
- FR-A- 2 264 792
- NL-A- 8 303 031

## Description

The invention relates to a process for aerobic composting organic waste with few contaminants, such as VFG waste (vegetable, fruit and garden waste).

Such a process is known from the German patent specification DE-A-4 000 510, wherein a process and a device for composting waste are described. According to the known process, biological material is supplied separated from other compostible material and the different components are processed via separate lines. Prior to aerating the biological material it is optionally reduced to a particle size of 10-40 mm and/or broken down to fibres in lengthwise direction. The reduced material, in particular green waste, is decomposited at first time in a hall. After first decomposition the material can be purified and the maximum size of the material particles left over is to be reduced. The remaining material particles, smaller than the material particles decomposited the first time, are fed to a second hall, where they are decomposited a second time. The specification also describes a gas circulation system for filtering the gases originating from composting material in a prior phase by feeding these gases through composting material in a further phase.

Composting takes place in a closed device, which is very expensive. Composting in the outside air can however result in odour nuisance and other environmental problems.

The object of the invention is to provide an effective process for composting organic material wherein odour nuisance and other environmental problems, even in the outside air, do not occur.

The invention has for its particular objective to provide a process for composting to overcome the disadvantages of the existing processes. Composting of VFG waste generally runs up against great technical problems because the compact structure of the waste mass forms an obstacle to a good aeration and the organic composition, for instance the C/N (carbon/nitrogen) ratio is not optimal for an adequate biological break-down by organisms.

The object is achieved according to the invention with a process for aerobic composting organic waste with few contaminants, such as VFG waste (vegetable, fruit and garden waste), by the following steps
(1) aerating the material with a downward air flow;
(2) separating the material aerated in step (1) into a fraction of coarse material and a fraction of less coarse material and feeding back the coarse material to step (1);
(3) aerating the less coarse material again with a downward airflow; and
(4) separating the material aerated in step (3) into a fraction of finest material and a fraction of less fine material and feeding back the less fine material in one of said aerating process steps (1,3).

Forced aeration of the material with a downward air flow has the important advantage, in addition to improved efficiency, that the gases released during composting can be collected in simple and effective manner for further treatment, whereby possible odour problems are eliminated.

The composting process is further improved according to the invention by adding to the organic material and mixing therewith a compostible conditioning material.

As conditioning material can for instance be added a less coarse or fine material previously obtained in one of the steps (2) or (4).

It has also been found that by adding to the organic material for composting and mixing therewith wood trimmings, generally designated as wood chippings, the organic material can be conditioned such that the C/N ratio is optimal for an adequate biological degrading.

Composting of organic material, in particular VFG waste, proceeds optimally when a maximum of one volume part of wood trimmings is added to two volume parts thereof. The C/N ratio and the moisture content of a thus composed mixture are optimal for a rapid and homogeneous composting.

The material for composting is preferably aerated by means of a branching system of aerating tubes, detachably connected end pieces of which system end beneath the material for aerating in the steps (1) and (3).

The application of detachably connected end pieces enables adaptation of the system of aerating tubes in rapid and simple, and therefore inexpensive, manner to the surface of the heap of material for aerating.

Aerating of the material for composting is optimalized still further by controlling the gas flow rate through the end pieces of the aerating tubes.

The process according to the invention is preferably characterized by covering the material for composting during aerating in the steps (1) and (3).

Covering of the material for composting has the important advantage that on the one hand the temperature of the mass for composting can be kept easily at the value required for the composting process, while on the other the gases released during composting do not escape into the atmosphere.

Covering of the material for composting is for example realized by pouring this material into a tray comprising a bottom and side walls and by covering the material with a layer of organic covering material.

A concrete tray is for instance used as tray comprising a bottom and side walls, wherein it is noted that simpler embodiments such as a pit covered with agricultural plastic is by no means excluded.

The process is characterized in embodiments by covering the material with wood trimmings or with coarse and fine material separated in at least one of the steps (2) and (4).

A thus covered material for composting is very well thermally insulated, while the removal and processing of the covering layer at the end of the composting of the underlying organic material does not require any special steps precisely because this layer consists of organic material for composting.

In one embodiment the process is characterized by separating the material in step (2) into a first fraction with particles having dimensions greater than c. 40 mm and a second fraction with particles having dimensions smaller than c. 40 mm.

In yet another embodiment the process is characterized by separating the material in step (4) into a third fraction with particles having dimensions greater than c. 15 mm and a fourth fraction with particles having dimensions smaller than c. 15 mm.

It has been found that material having particles with dimensions smaller than c. 40 mm is for the main part composted in a relatively short time by the aerating in step (3).

The aeration time of the material in step (1) amounts for instance to between two and about four weeks, in particular about three weeks.

The aerating of the material for the second time in step (3) takes place during a period of between about four and about eight weeks, in particular about six weeks.

When the quality of the starting material requires such, the process is characterized in a following embodiment by removal of non-compostible residual material present in the first fraction of coarse material separated in step (2).

The process is advantageously performed such that the gases released during the composting process are treated by being washed with percolation water originating from the composting process and subsequently being guided through a bio-filter.

A bio-filter is a filter with biologically active filter material whereby contaminated and usually odorous constituents of a biological nature in the gases are broken down.

Due to the washing of the gases ammonia vapours (NH₃) for instance are precipitated out of the gases. Treating of the gases resulting from the composting process in combination with treatment of the percolation water resulting from that process has the advantage that ammonia constituents are further subjected to the cleaning process of the percolation water, while on the other hand the percolation water is aerated due to its use as washing water for the gases, whereby anaerobia in the percolation water is avoided as far as possible.

Yet another embodiment of a process according to the invention is characterized by treating the gases released during the composting process by guiding them through a bio-filter filled with a filter material comprising a mixture of wood trimmings and tree-bark and compost in relative volume quantities of respectively about 45%, about 45% and about 10%.

It has been found that filtering of the composting gases in a bio-filter with such filter material removes from the composting gases the foul-smelling and environmentally damaging constituents thereof, or at least reduces them to a content such that the filtered gases can be released into the outside air without problem.

The invention likewise relates to a device for aerobic composting organic waste with few contaminants, such as VFG waste (vegetables, fruit and garden waste) according to a process as described above, which comprises:
- a first aerating device for aerating with a downward air flow the material to be composted,
- a fractionating device for separating the material aerated in the first aerating device,
- a second aerating device for separately aerating with a downward gas flow the less coarse material separated in the fractioning device.

Such a device is known from the above cited German patent specification DE-A-4 000 510. As stated above, however, the known device has the drawback of very high costs.

Another object of the invention is therefore to provide a device with a low purchase price with which organic waste can be composted in an environmentally non-damaging manner at low operating cost.

This object is achieved according to the invention with a device as indicated above, characterized in that the device further comprises,
- a second fractionating device for separating the material aerated in the second aerating device, and
- means to feed back a fraction of the material separated in a fractioning device in a preceding aerating device, and that at least one aeration device consists of a branching system of aeration tubes, detachable end pieces of said system end in the lowest portion of the aeration device.

In one embodiment the composting device comprises a device for adding to the organic material and mixing therewith a compostible conditioning material.

The end pieces of the branching system of aeration tubes are for example perforated plastic tubes (for instance HDPE tubes) located on the floor of the aerating device which are covered with a layer of air permeable organic material, for example wood chippings. Air is drawn out of the material for composting via these tubes using a pumping device. The extracted air is subsequently washed and filtered for example. A device provided with aerating tubes preferably comprises control means for controlling the gas flow rate through the end pieces. The end pieces are closed for instance at one outer end and provided in longitudinal direction with perforations having a diameter increasing in the direction of the outer end.

The composting device for the material for composting preferably comprises trays comprising a bottom and side walls. Such trays are for instance made of concrete but the invention is not limited thereto.

Yet another embodiment is characterized by a device for removing non-compostible residual material present in the first fraction of coarse material separated in the second step.

Such a device for removing residual material comprises for instance a simple conveyor belt for manual sorting, but also comprises advanced detection and removal systems, for instance for ferromagnetic metal remnants and other inorganic contaminants.

With the process and in a device according to the invention relatively high-grade organic waste material (for instance VFG waste) can be composted rapidly and completely at comparatively low cost, wherein adverse side effects having an impact on the environment, namely the occurrence of stench caused by released gases, are eliminated or at least reduced to a considerable extent.

The invention will now be further elucidated hereinafter in respect of an embodiment and with reference to the drawing.

In the drawing:
figure 1 shows a block diagram for a process for composting according to the invention;
figure 2 shows a part of a composting device according to the invention in perspective view;
figure 3 shows a detail of the device according to figure 2;
figure 4 and figure 5 show an enlarged detail of figure 3.

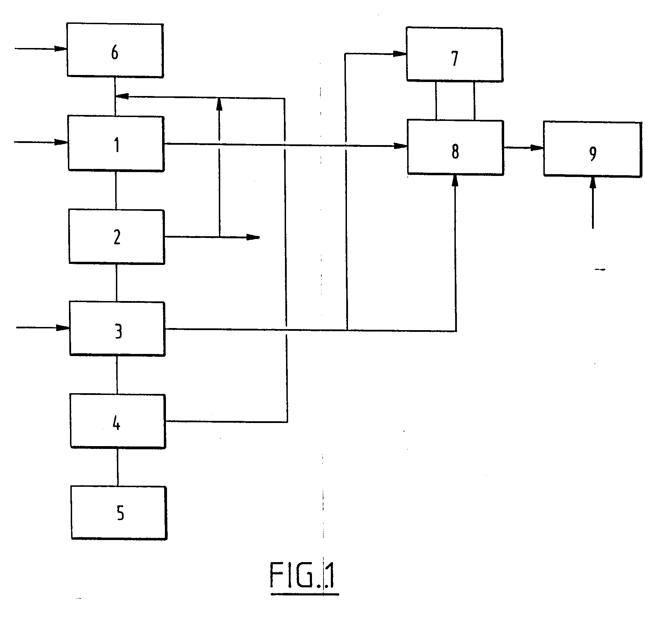

Figure 1 shows the block diagram for a process for composting, according to which the material for composting is aerated in a first step 1, whereafter it is separated in a second step 2 by sieving into fractions with particles larger than about 40 mm and particles smaller than about 40 mm, which latter particles are aerated a second time in a third step 3. The particles larger than about 40 mm at the end of the second step are freed of inorganic remnants which are discharged as residue, while the organic material is fed back to be aerated again as according to the first step 1. The material composted in the third step 3 is sieved in a fourth step 4, whereafter a fraction with particles larger than 15 mm is again fed back to the first step 1 and a fraction with particles of dimensions smaller than 15 mm is discharged as finished compost. Before the organic material is aerated in the first step 1 it is mixed in a mixing device 6 with wood chippings. Water and air originating from the composting process are collected and fed respectively to a basin 7 with percolation water, a gas conditioning device 8 followed by a bio-filter 9.

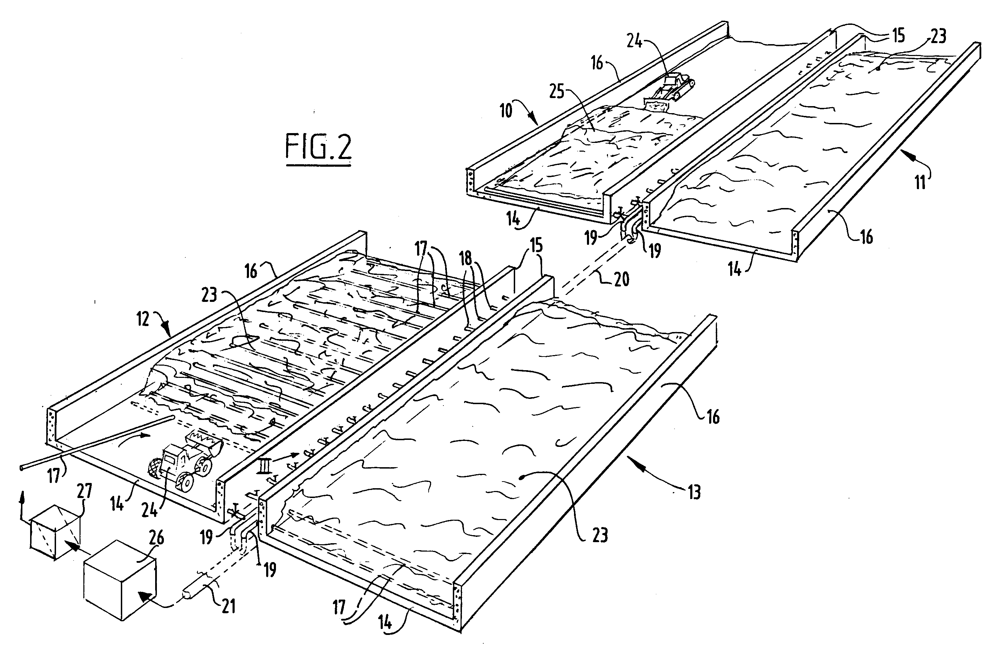

Figure 2 shows four composting trays 10-13 each with a rectangular concrete bottom 14 and a pair of concrete standing edges 15, 16 along the long side. The cells are placed in a rectangle, wherein in each case two cells 10 and 11 respectively 12 and 13 lie mutually adjacent and in each case two cells 10 and 12 respectively 11 and 13 lie mutually in line. The mutually facing inner side walls 15 are provided with closable openings to which end pieces 17 of a system of aerating tubes can be fixed. The connecting openings in the walls 15 communicate via connecting tubes 18 with drain lines 19 which debouch into a central draining line 21 directly or via a collective underground drain line 20. The connecting openings in the cell walls 15 are situated at ground level. The air suction can be controlled in manual or automated manner per end piece 17 using an adjustable valve 22. The trays 10-13 have dimensions such that the material 23 for composting can be supplied using a wheel loader 24. As a composting tray 24 is filled, one end piece 17 of the aerating system is laid at a time on the bottom 14 of the tray 12 and then buried under material 23 for composting supplied with the wheel loader 24. When the heap of material on a particular end piece 17 is sufficiently high a second end piece 17 is laid and so on, until the whole tray 12 is filled. The emptying of a tray 10 with finished compost 25 takes place in reverse sequence; so much compost 25 is discharged that an end piece 17 is again exposed and can be removed, whereafter compost 25 lying further down the tray 10 becomes accessible to the wheel loader 24. The figure further shows schematically a pumping device 26 and a filter 27 for respectively sucking in and purifying composting gases. Because the central draining tube 21 ultimately branches into the detachable end pieces 17 which end in at least four trays 10-13, one pump 26 can suffice, the capacity of which is smaller than the sum of the capacity of four pumps which would be required for each tray separately. Use is made herein of the fact that in normal operating conditions the trays 10-13 are not filled or emptied simultaneously. In the embodiment shown one tray 12 is partially filled, two trays 11, 13 are wholly filled and one tray 10 is already partially emptied. The debouching of the end pieces of different trays with material that is composted to a mutually differing extent provides the further advantage that the total flow rate of gases drawn from the different trays is quite constant on average, while this varies considerably in the course of time per separate tray, while moreover the temperature of the gas sucked in by pump 26 is likewise quite constant on average, which is important for an adequate biological cleaning in a bio-filter, for instance filter 27. The flow rate and the temperature of the gases released during composting can be controlled still further using the adjustable valves 22.

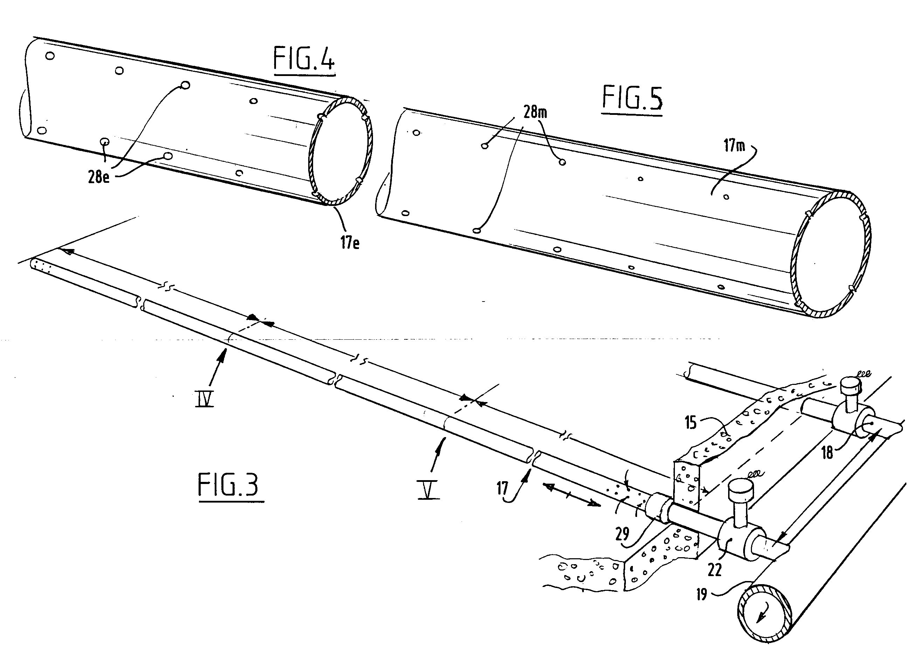

Figure 3 shows a detail of a tray 12 of figure 2 with a draining tube 19 from which, via connecting tubes 18, adjustable valves 22 and couplings 29, detachable end pieces 17 extend through a standing wall 15 from this wall 15, over the bottom 14 of a tray 12. The end pieces 17 are closed at the end and are provided in longitudinal direction with holes having a diameter increasing in the direction of the outer end, as shown in figures 4 and 5.

Figure 4 shows in detail the outer end 17e of end piece 17 with holes 28e.

Figure 5 shows a detail of a central portion 17m with holes 28m, the diameter of which is smaller than that of the holes 28e in figure 4.

## Claims

1. Process for aerobic composting organic waste with few contaminants, such as VFG waste (vegetable, fruit and garden waste), by the following steps:
(1) aerating the material with a downward air flow;
(2) separating the material aerated in step (1) into a fraction of coarse material and a fraction of less coarse material and feeding back the coarse material to step (1);
(3) aerating the less coarse material again with a downward airflow; and
(4) separating the material aerated in step (3) into a fraction of finest material and a fraction of less fine material and feeding back the less fine material in one of said aerating process steps (1,3).

2. Process as claimed in claim 1, comprising adding to the organic material and mixing therewith a compostible conditioning material.

3. Process as claimed in claim 2, in which the conditioning material is the less coarse material obtained previously in step (2).

4. Process as claimed in claim 2, in which the conditioning material is the less fine material obtained previously in step (4).

5. Process as claimed in claim 2, in which as conditioning material is added wood trimmings.

6. Process as claimed in any of the claims 1-5, comprising controlling the gas flow rate through the aerated material.

7. Process as claimed in any of the claims 1-6, comprising covering the material for composting during aerating in the steps (1) and (3).

8. Process as claimed in claim 7, comprising covering the material for composting with a layer of organic covering material.

9. Process as claimed in claim 8, comprising covering the material for composting with coarse and less fine material separated in at least one of the steps (2) and (4).

10. Process as claimed in claim 1, comprising removing non-compostible residual material present in the first fraction of coarse material separated in step (2).

11. Process as claimed in any of the foregoing claims, comprising treating the gases released during the composting process by washing them with percolation water originating from the composting process and subsequently guiding them through a bio-filter (9).

12. Device for aerobic composting organic waste with few contaminants, such as VFG wase (vegetables, fruit and garden waste) according to a process as claimed in claim 1, which comprises:
- a first aerating device for aerating with a downward air flow the material to be composted,
- a fractionating device for separating the material aerated in the first aerating device,
- a second aerating device for separately aerating with a downward gas flow the less coarse material separated in the fractioning device, characterized in that the device further comprises,
- a second fractionating device for separating the material aerated in the second aerating device, and
- means to feed back a fraction of the material separated in a fractioning device in a preceding aerating device,
and that at least one aeration device consists of a branching system of aeration tubes, detachable end pieces (17) of said system end in the lowest portion of the aeration device.

13. Device as claimed in claim 12 for performing a process according to claim 2, characterized by a device (6) for adding to the organic material and mixing therewith a compostible conditioning material.

14. Device as claimed in claim 12 or 13, characterized in that the end pieces (17) are closed at one outer end and provided in longitudinal direction with perforations (28) having a diameter increasing in the direction of the outer end.

15. Device as claimed in any of the claims 12-14, characterized by at least one tray (10-13, 24) for the aerated material to be poured therein.

16. Device as claimed in any of the claims 12-15, characterized by a bio-filter (9) and a gas washing device with means for feed thereto of percolation water originating from the composting process.

17. Device as claimed in any of the claims 12-16, characterized by a bio-filter (9) filled with filter material comprising a mixture of wood trimmings and tree-bark and compost in relative volume quantities of respectively about 45%, about 45% and about 10%.

## Patentansprüche

1. Verfahren zum aeroben Kompostieren organischen Abfalls mit geringen Verunreinigungen, wie beispielsweise GFG-Abfall (Gemüse-, Früchte- und Gartenabfall), mit den folgenden Schritten:
(1) Belüften des Materials mit einem abwärtsgerichteten Luftstrom;
(2) Trennen des in Schritt (1) belüfteten Materials in eine Fraktion aus grobem Material und eine Fraktion aus weniger grobem Material und Rückführen des groben Materials zu Schritt (1);
(3) wiederholtes Belüften des weniger groben Materials mit einem abwärtsgerichteten Luftstrom; und
(4) Trennen des in Schritt (3) belüfteten Materials in eine Fraktion aus feinstem Material und eine Fraktion aus weniger feinem Material und Rückführen des weniger feinen Materials in einen der Belüftungsverfahrensschritte (1, 3).

2. Verfahren nach Anspruch 1, bei welchem ein kompostierbares Konditioniermaterial dem organischen Material hinzugefügt und mit diesem vermischt wird.

3. Verfahren nach Anspruch 2, wobei das Konditioniermaterial das zuvor in Schritt (2) erhaltene, weniger grobe Material ist.

4. Verfahren nach Ansspruch 2, wobei das Konditioniermaterial das zuvor in Schritt (4) erhaltene weniger feine Material ist.

5. Verfahren nach Anspruch 2, wobei als Konditioniermaterial Holzspäne hinzugefügt werden.

6. Verfahren nach einem der Ansprüche 1-5, wobei die Gasdurchflußrate durch das belüftete Material gesteuert wird.

7. Verfahren nach einem der Ansprüche 1-6, wobei das Material zum Kompostieren während des Belüftens in den Schritten (1) und (3) bedeckt wird.

8. Verfahren nach Anspruch 7, wobei das Material zum Kompostieren mit einer Schicht aus organischem Abdeckmaterial bedeckt wird.

9. Verfahren nach Anspruch 8, wobei das Material zum Kompostieren mit grobem und weniger feinem Material bedeckt wird, das in wenigstens einem der Schritte (2) und (4) getrennt wurde.

10. Verfahren nach Anspruch 1, wobei nicht kompostierbares Restmaterial, das in der ersten Fraktion aus in dem Schritt (2) getrenntem grobem Material vorhanden ist, entfernt wird.

11. Verfahren nach einem der vorstehenden Ansprüche, wobei die während des Kompostiervorgangs entweichenden Gase dadurch behandelt werden, indem sie mit vom Kompostiervorgang herrührendem Perkolationswasser gewaschen und darauffolgend durch einen Bio-Filter (9) geführt werden.

12. Vorrichtung zum aeroben Kompostieren organischen Abfalls mit geringen Verunreinigungen, wie beispielsweise GFG-Abfall (Gemüse-, Früchte- und Gartenabfall) gemäß einem Verfahren nach Anspruch 1, die aufweist:
- eine erste Belüftungseinrichtung zum Belüften des zu kompostierenden Materials mit einem abwärtsgerichteten Luftstrom,
- eine Fraktioniereinrichtung zum Trennen des in der ersten Belüftungseinrichtung belüfteten Materials,
- eine zweite Belüftungseinrichtung zum separaten Belüften des in der Fraktioniereinrichtung getrennten, weniger groben Materials mit einem abwärts gerichteten Gasstrom, dadurch gekennzeichnet, daß die Vorrichtung des weiteren aufweist:
- eine zweite Fraktioniereinrichtung zum Trennen des in der zweiten Belüftungseinrichtung belüfteten Materials und
- Mittel zum Rückführen einer Fraktion des Materials, das in einer Fraktioniereinrichtung in einer vorhergehenden Belüftungseinrichtung getrennt wurde, und wobei wenigstens eine Belüftungseinrichtung aus einem Verzweigungssystem bzw. verzweigten System aus Belüftungsrohren besteht, und abnehmbare Endstücke (17) des Systems in dem untersten Abschnitt der Belüftungseinrichtung enden.

13. Vorrichtung nach Anspruch 12 zur Durchführung eines Verfahrens nach Anspruch 2, gekennzeichnet durch eine Einrichtung (6), mit der kompostierbares Konditioniermaterial dem organischen Material hinzugefügt und mit diesem vermischt wird.

14. Vorrichtung nach Anspruch 12 oder 13, dadurch gekennzeichnet, daß die Endstücke (17) an einem äußeren Ende verschlossen und in Längsrichtung mit Perforationen (28) versehen sind, deren Durchmesser in Richtung des äußeren Endes zunimmt.

15. Vorrichtung nach einem der Ansprüche 12-14, gekennzeichnet durch wenigstens ein Behältnis (10-13, 24), in das das belüftete Material geschüttet wird.

16. Vorrichtung nach einem der Ansprüche 12-15, gekennzeichnet durch einen Bio-Filter (9) und eine Gaswascheinrichtung mit Mitteln, um dieser von dem Kompostiervorgang herrührendes Perkolationswasser zuzuführen.

17. Vorrichtung nach einem der Ansprüche 12-16, gekennzeichnet durch einen Bio-Filter (9), der mit Filtermaterial gefüllt ist, das ein Gemisch aus Holzschnitzeln und Baumrinde sowie Kompost in relativen Volumenmengen von jeweils etwa 45%, etwa 45% und etwa 10% aufweist.

## Revendications

1. Procédé de compostage aérobie de déchets organiques ayant peu d'agents de contamination, tels que des déchets LFJ (déchets de légumes, de fruits et de jardinage), par les étapes suivantes :
(1) aération de la matière par un écoulement d'air allant vers le bas ;
(2) séparation de la matière aérée à l'étape (1) en une fraction de matière grossière et en une fraction de matière moins grossière et renvoi de la matière grossière à l'étape (1) ;
(3) aération de la matière moins grossière de nouveau par un écoulement d'air allant vers le bas ; et
(4) séparation de la matière aérée à l'étape (3) en une fraction de matière plus fine et une fraction de matière moins fine et renvoi de la matière moins fine dans l'une desdites étapes de processus d'aération (1, 3).

2. Procédé selon la revendication 1, comprenant l'ajout et le mélange à la matière organique d'une matière de conditionnement pouvant subir un compostage.

3. Procédé selon la revendication 2, dans lequel la matière de conditionnement est la matière moins grossière précédemment obtenue à l'étape (2).

4. Procédé selon la revendication 2, dans lequel la matière de conditionnement est la matière moins fine précédemment obtenue à l'étape (4).

5. Procédé selon la revendication 2, dans lequel on ajoute des copeaux de bois en tant que matière de conditionnement.

6. Procédé selon l'une quelconque des revendications 1 à 5, comprenant la commande de la vitesse d'écoulement de gaz à travers la matière aérée.

7. Procédé selon l'une quelconque des revendications 1 à 6, comprenant la couverture de la matière pour le compostage pendant l'aération dans les étapes (1) et (3).

8. Procédé selon la revendication 7, comprenant la couverture de la matière pour le compostage par une couche de matière organique de couverture.

9. Procédé selon la revendication 8, comprenant la couverture de la matière pour le compostage par des matières grossières et moins fines séparées dans au moins une des étapes (2) et (4).

10. Procédé selon la revendication 1, comprenant l'enlèvement de matière résiduelle ne pouvant pas subir de compostage, présente dans la première fraction de matière grossière séparée dans l'étape (2).

11. Procédé selon l'une quelconque des revendications précédentes, comprenant le traitement des gaz libérés pendant le procédé de compostage en les lavant avec de l'eau d'infiltration trouvant son origine dans le procédé de compostage et en les guidant ensuite à travers un bio-filtre (9).

12. Dispositif pour le compostage aérobie de déchets organiques ayant peu d'agents de contamination, tels que des déchets LFJ (déchets de légumes, de fruits et de jardinage) selon un procédé selon la revendication 1, qui comprend :
- un premier dispositif d'aération pour une aération par un écoulement d'air allant vers le bas de la matière devant subir un compostage,
- un dispositif de fractionnement pour séparer la matière aérée dans le premier dispositif d'aération,
- un second dispositif d'aération pour une aération séparée par un écoulement de gaz allant vers le bas de la matière moins grossière séparée dans le dispositif de fractionnement, caractérisé en ce que le dispositif comprend, de plus :
- un second dispositif de fractionnement pour séparer la matière aérée dans le second dispositif d'aération, et
- des moyens pour renvoyer une fraction de la matière séparée dans un dispositif de fractionnement dans un dispositif d'aération précédent,
et en ce qu'au moins un dispositif d'aération est constitué d'un système ramifié de tubes d'aération, des pièces d'extrémité amovibles (17) dudit système se terminant dans la partie la plus basse du dispositif d'aération.

13. Dispositif selon la revendication 12, pour effectuer un procédé selon la revendication 2, caractérisé par un dispositif (6) pour ajouter et pour mélanger à la matière organique une matière de conditionnement pouvant subir un compostage.

14. Dispositif selon la revendication 12 ou 13, caractérisé en ce que les pièces d'extrémité (17) sont fermées au niveau d'une extrémité extérieure et sont munies, dans la direction longitudinale, de perforations (28) ayant un diamètre allant croissant dans le sens de l'extrémité extérieure.

15. Dispositif selon l'une quelconque des revendications 12 à 14, caractérisé par au moins un bac (10 à 13, 24) pour la matière aérée à verser à l'intérieur.

16. Dispositif selon l'une quelconque des revendications 12 à 15, caractérisé par un bio-filtre (9) et par un dispositif de lavage de gaz avec des moyens pour délivrer à ce dernier de l'eau d'infiltration généré dans le procédé de compostage.

17. Dispositif selon l'une quelconque des revendications 12 à 16, caractérisé par un bio-filtre (9) rempli par une matière de filtrage comprenant un mélange de copeaux de bois et d'écorces d'arbre et de compost en quantités relatives de volumes, respectivement égales à environ 45 %, environ 45 % et environ 10 %.
